# EUROPEAN PATENT APPLICATION

(11) **EP 4 831 857 A1**
(43) Date of publication of application: **28.10.2026**
(21) Application number: 24905724.1
(22) Date of filing: 26.09.2024
(51) Int. Cl.: G06F 21/64

(54) **DATA PROCESSING METHOD AND APPARATUS, DEVICE, AND STORAGE MEDIUM**

(30) Priority: 21.12.2023 CN 202311777148
(71) Applicant: BYD Company Limited, Shenzhen, Guangdong 518118 (CN)
(72) Inventor: YANG, Jingsong, Shenzhen, Guangdong 518118 (CN); DENG, Linwang, Shenzhen, Guangdong 518118 (CN); FENG, Tianyu, Shenzhen, Guangdong 518118 (CN)
(74) Representative: Mathys & Squire
(86) International application number: PCT/CN2024/121489
(87) International publication number: WO 2025/130234

(57) **Abstract**

A data processing method and apparatus, a device, and a storage medium. The method comprises: receiving configuration information data sent by a control node, wherein the configuration information data comprises node data generated by at least one component node within a target time period; from the configuration information data, acquiring node data generated by a target component node within the target time period; and from a distributed storage network, acquiring node data generated by the target component node within M time periods prior to the target time period.

## Description

### CROSS-REFERENCE TO RELATED APPLICATIONS

The present disclosure claims priority to Chinese Patent Application No. 202311777148.1 filed on December 21, 2023, entitled " DATA PROCESSING METHOD AND APPARATUS, DEVICE, AND STORAGE MEDIUM", which is incorporated herein by reference in its entirety.

### FIELD

The present disclosure relates to the field of battery technology, and in particular, to a data processing method and apparatus, a device, and a storage medium.

### BACKGROUND

In recent years, the number of electric vehicles in various countries has grown exponentially. To ensure the safety of electric vehicles, it is necessary to monitor the battery health status and the remaining battery life at any time, so as to detect problems such as abnormal degradation of battery capacity in advance, thereby timely optimizing the vehicle control strategy to extend the service life and reducing safety risks caused by abnormal degradation of battery capacity.

Power battery capacity is an important indicator of the battery health status and the remaining battery life. Therefore, it is crucial to detect the battery capacity in a timely and accurate way. Conventional battery capacity detection requires correlating configuration information of a battery pack from multiple lifecycle stages, such as cell design, pack production, and vehicle assembly, as well as national standard and enterprise standard data during the use of the battery pack in the vehicle. Since data from different time periods are stored in devices of different entities, when the data involves multiple entities, there is a problem that the data used for power battery capacity detection cannot guarantee completeness and accuracy.

### SUMMARY

The technical problem to be solved by the embodiments of the present disclosure is to provide a data processing method, apparatus, device, and storage medium, which can ensure the completeness and accuracy of configuration information data throughout the entire life cycle.

According to a first aspect, the embodiments of the present disclosure provide a data processing method. The method includes: configuration information data sent by a control node is received, wherein the configuration information data includes node data generated by at least one component node within a target time period; node data generated by a target component node within the target time period is acquired from the configuration information data; node data generated by the target component node within M time periods prior to the target time period is acquired from a distributed storage network, wherein the distributed storage network is a distributed storage network composed of the control node and the at least one component node, and M is a positive integer; and the node data generated by the target component node within the M time periods prior to the target time period and the node data generated by the target component node within the target time period are stored into the distributed storage network.

It can be seen that, in the embodiments of the present disclosure, after each component node generates node data within any time period, the node data generated by each component node is sent to the control node. The control node integrates the node data generated by each component node within the same time period to acquire configuration information data, and then sends the configuration information data to each component node. On this basis, after receiving the configuration information data sent by the control node, any component node can acquire, from the distributed storage network, the node data generated by the target component node within the M time periods prior to the target time period, and then the component node stores the node data generated by the target component node within the M time periods prior to the target time period and the node data generated by the target component node within the target time period into the distributed storage network, thereby ensuring the completeness and accuracy of the configuration information data throughout the entire life cycle.

In an embodiment, the distributed storage network includes a blockchain network; the acquiring node data generated by the target component node within the M time periods prior to the target time period from the distributed storage network includes: a target block is acquired from the blockchain network, wherein the blockchain network is a blockchain network composed of the at least one component node, the control node, and a device node, and the target block is generated based on node data generated by the target component node within a time period prior to the target time period; and storing the node data generated by the target component node within the M time periods prior to the target time period and the node data generated by the target component node within the target time period into the distributed storage network includes: a new block is generated based on the node data included in the target block and the node data generated by the target component node within the target time period; and the new block is published to the blockchain network.

In an embodiment, before storing the node data generated by the target component node within the M time periods prior to the target time period and the node data generated by the target component node within the target time period into the distributed storage network, the method further includes: the node data generated by the target component node within the M time periods prior to the target time period and the node data generated by the target component node within the target time period are sent to other component nodes in the distributed storage network, thereby enabling each of the other component nodes to verify, based on a consensus mechanism, the node data generated by the target component node within the M time periods prior to the target time period and the node data generated by the target component node within the target time period to acquire verification information; the verification information from each of the other component nodes is received; and if it is determined, based on the verification information from each of the other component nodes, that the verification is successful, storing the node data generated by the target component node within the M time periods prior to the target time period and the node data generated by the target component node within the target time period into the distributed storage network is triggered.

In an embodiment, storing the node data generated by the target component node within the M time periods prior to the target time period and the node data generated by the target component node within the target time period into the distributed storage network includes: if it is determined, based on the verification information from each of the other component nodes, that the verification is unsuccessful, a vote is initiated to arbitration component nodes in the distributed storage network, wherein the arbitration component nodes include at least one component node in the distributed storage network; a voting result from the arbitration component nodes is received; and if the voting result indicates approval, the node data generated by the target component node within the M time periods prior to the target time period and the node data generated by the target component node within the target time period that are indicated as the voting being successful are stored into the distributed storage network.

In an embodiment, the distributed storage network includes a device node; after storing the node data generated by the target component node within the M time periods prior to the target time period and the node data generated by the target component node within the target time period into the distributed storage network, the method further includes: a data acquisition request sent by a cloud server is received; in response to the data acquisition request, configuration information data generated by the at least one component node within a current life cycle is acquired from the distributed storage network, wherein the current life cycle includes the target time period and the M time periods prior to the target time period; and the acquired configuration information data is sent to the cloud server, thereby enabling the cloud server to perform, based on the acquired configuration information data and device usage data collected within the current life cycle, a cloud-based batch detection on a power battery capacity of a device corresponding to the device node to acquire a remaining power battery capacity, wherein the device usage data is sent by the device node to the cloud server.

In an embodiment, the method further includes: the remaining power battery capacity sent by the device node is received, wherein the power battery capacity detection result is sent by the cloud server to the device node; and the remaining power battery capacity is stored into the distributed storage network.

In an embodiment, the method further includes: the remaining power battery capacity for the current life cycle, and remaining power battery capacities for N consecutive life cycles prior to the current life cycle are acquired from the distributed storage network, wherein N is a positive integer; based on the acquired N+1 remaining power battery capacities and the life cycle corresponding to each remaining power battery capacity, a degradation state of the remaining power battery capacity of the device is determined, wherein the degradation state is configured to indicate whether there is an abnormal degradation in the remaining power battery capacity of the device; and if the degradation state indicates that there is an abnormal degradation in the remaining power battery capacity of the device, notification information is output.

In an embodiment, the method further includes: the configuration information data sent by the control node is stored into the distributed storage network.

According to a second aspect, the embodiments of the present disclosure provide a communication system, which includes: a control node and at least one component node, the at least one component node includes a target component node, and the target component node is configured to execute the method described in the first aspect.

According to a third aspect, the embodiments of the present disclosure provide a data processing apparatus. The apparatus includes: a receiving unit configured to receive configuration information data broadcast by a control node, wherein the configuration information data includes node data generated by at least one component node within a target time period; an acquiring unit configured to acquire, from the configuration information data, node data generated by a target component node within the target time period; the acquiring unit is further configured to acquire, from a distributed storage network, node data generated by the target component node within M time periods prior to the target time period, wherein the distributed storage network is a distributed storage network composed of the control node and the at least one component node, and M is a positive integer; and a storage unit configured to store the node data generated by the target component node within the M time periods prior to the target time period and the node data generated by the target component node within the target time period into the distributed storage network.

In an embodiment, the distributed storage network includes a blockchain network; the acquiring unit acquiring node data generated by the target component node within the M time periods prior to the target time period from the distributed storage network includes: acquiring a target block from the blockchain network, wherein the blockchain network is a blockchain network composed of the at least one component node and the control node, and the target block is generated based on node data generated by the target component node within a time period prior to the target time period; and storing the node data generated by the target component node within the M time periods prior to the target time period and the node data generated by the target component node within the target time period into the distributed storage network includes: generating a new block based on the node data included in the target block and the node data generated by the target component node within the target time period; and publishing the new block to the blockchain network.

In an embodiment, the data processing apparatus further includes a sending unit; before the storage unit stores the node data generated by the target component node within the M time periods prior to the target time period and the node data generated by the target component node within the target time period into the distributed storage network, the sending unit is configured to send the node data generated by the target component node within the M time periods prior to the target time period and the node data generated by the target component node within the target time period to other component nodes in the distributed storage network, thereby enabling each of the other component nodes to verify, based on a consensus mechanism, the node data generated by the target component node within the M time periods prior to the target time period and the node data generated by the target component node within the target time period to acquire verification information; the receiving unit is further configured to receive the verification information from each of the other component nodes; and if it is determined, based on the verification information from each of the other component nodes, that the verification is successful, trigger storing the node data generated by the target component node within the M time periods prior to the target time period and the node data generated by the target component node within the target time period into the distributed storage network.

In an embodiment, the storage unit storing the node data generated by the target component node within the M time periods prior to the target time period and the node data generated by the target component node within the target time period into the distributed storage network includes: if it is determined, based on the verification information from each of the other component nodes, that the verification is unsuccessful, initiating a vote to arbitration component nodes in the distributed storage network, wherein the arbitration component nodes include at least one component node in the distributed storage network; receiving a voting result from the arbitration component nodes; and if the voting result indicates approval, storing the node data generated by the target component node within the M time periods prior to the target time period and the node data generated by the target component node within the target time period that are indicated as the voting being successful into the distributed storage network.

In an embodiment, the distributed storage network includes a device node; after the storage unit stores the node data generated by the target component node within the M time periods prior to the target time period and the node data generated by the target component node within the target time period into the distributed storage network, the receiving unit is further configured to receive a data acquisition request sent by a cloud server; the acquiring unit is further configured to, in response to the data acquisition request, acquire configuration information data generated by the at least one component node within a current life cycle from the distributed storage network, wherein the current life cycle includes the target time period and the M time periods prior to the target time period; and the sending unit is further configured to send the acquired configuration information data to the cloud server, thereby enabling the cloud server to perform, based on the acquired configuration information data and device usage data collected within the current life cycle, a cloud-based batch detection on a power battery capacity of a device corresponding to the device node to acquire a remaining power battery capacity, wherein the device usage data is sent by the device node to the cloud server.

In an embodiment, the receiving unit is further configured to receive the remaining power battery capacity sent by the device node, wherein the power battery capacity detection result is sent by the cloud server to the device node; and the storage unit is further configured to store the remaining power battery capacity into the distributed storage network.

In an embodiment, the storage unit is further configured to store the configuration information data sent by the control node into the distributed storage network.

According to a fourth aspect, the embodiments of the present disclosure provide a terminal device. The terminal device includes a memory, a communication interface, and a processor, wherein the memory, the communication interface, and the processor are interconnected; the memory stores a computer program, and the processor invokes the computer program stored in the memory to implement the method described in the first aspect.

According to a fifth aspect, the embodiments of the present disclosure provide a vehicle. The vehicle includes a vehicle body and a processing module, and the processing module is configured to execute the method described in the first aspect to manage the vehicle.

According to a sixth aspect, the embodiments of the present disclosure provide a non-volatile computer-readable storage medium. The computer-readable storage medium stores a computer program, and the computer program, when executed by a processor, implements the method described in the first aspect.

According to a seventh aspect, the embodiments of the present disclosure provide a computer program product. The computer program product stores a computer program, and the computer program, when executed by a processor, implements the method described in the first aspect.

### BRIEF DESCRIPTION OF THE DRAWINGS

To more clearly illustrate the technical solutions in the embodiments of the present disclosure or the background art, the following briefly introduces the drawings required for use in the embodiments of the present disclosure or the background art.
FIG. 1 is a schematic diagram of a system architecture of a data processing method of an embodiment of the present disclosure;
FIG. 2 is a schematic diagram of a framework for power battery capacity detection of an embodiment of the present disclosure;
FIG. 3 is a flowchart of a data processing method of an embodiment of the present disclosure;
FIG. 4 is a flowchart of a data processing method based on a blockchain of an embodiment of the present disclosure;
FIG. 5 is a schematic diagram of a blockchain implementation principle of an embodiment of the present disclosure;
FIG. 6 is a flowchart of another data processing method of an embodiment of the present disclosure;
FIG. 7 is a schematic diagram of power battery capacity detection based on a blockchain of an embodiment of the present disclosure;
FIG. 8 is a schematic diagram of a data processing apparatus of an embodiment of the present disclosure;
FIG. 9 is a schematic structural diagram of a terminal device of an embodiment of the present disclosure;
FIG. 10 is a schematic diagram of a data processing apparatus of an embodiment of the present disclosure.

Description of Reference Numerals:
800-data processing apparatus, 801-receiving unit, 802-acquiring unit, 803-storage unit, 804-sending unit;
900-terminal device, 901-processor, 902-memory, 903-communication interface, 904-bus

### DETAILED DESCRIPTION

The following describes the embodiments of the present disclosure with reference to the accompanying drawings of the embodiments of the present disclosure.

In the following description, when referring to the accompanying drawings, the same numerals in different drawings represent the same or similar elements unless otherwise indicated. The implementations described in the following exemplary embodiments do not represent all implementations consistent with the present disclosure. Instead, they are merely examples of apparatuses and methods consistent with some aspects of the present disclosure as detailed in the appended claims.

It will be noted that, in this document, the terms "include", "comprise" or any other variations thereof are intended to cover non-exclusive inclusion, such that a process, method, article, or apparatus that includes a series of elements includes not only those elements but also other elements not explicitly listed, or elements inherent to such process, method, article, or apparatus. Without further limitation, an element defined by the phrase "comprising a ..." does not exclude the presence of additional identical elements in the process, method, article, or apparatus that includes the element. In addition, components, features, or elements having the same name in different embodiments of the present disclosure may have the same meaning or different meanings, and the specific meaning thereof shall be determined by their interpretation in the specific embodiment or further in conjunction with the context of the specific embodiment.

It will be understood that although terms such as first, second, and third may be used herein to describe various pieces of information, such information should not be limited to these terms. These terms are only used to distinguish the same type of information from one another. For example, without departing from the scope of this document, first information may also be referred to as second information, and similarly, second information may also be referred to as first information. Depending on the context, the word "if" as used herein may be interpreted as "in the case of" or "when" or "in response to determining". Furthermore, as used herein, the singular forms "a", "an", and "the" are intended to include the plural forms as well, unless the context indicates otherwise. It will be further understood that the terms "comprise", "include" indicate the presence of stated features, steps, operations, elements, components, items, categories, and/or groups, but do not exclude the presence, occurrence, or addition of one or more other features, steps, operations, elements, components, items, categories, and/or groups. The terms "or", "and/or", "at least one of the following", etc. used in the present disclosure may be interpreted as inclusive, or as meaning any one or any combination. For example, "at least one of the following: A, B, C" means "any one of the following: A; B; C; A and B; A and C; B and C; A and B and C". As another example, "A, B, or C" or "A, B, and/or C" means "any one of the following: A; B; C; A and B; A and C; B and C; A and B and C". Exceptions to this definition occur only when the combination of elements, functions, steps, or operations is inherently mutually exclusive in some methods.

It will be understood that although the steps in the flowcharts of the embodiments of the present disclosure are displayed sequentially as indicated by arrows, these steps are not necessarily performed in the order indicated by the arrows. Unless explicitly stated herein, the execution of these steps is not strictly limited to a particular order, and they may be performed in other orders. Moreover, at least some of the steps in the figures may include a plurality of sub-steps or a plurality of stages, which are not necessarily completed at the same time but may be performed at different times, and the order of execution thereof is not necessarily sequential, but may be performed alternately or alternately with other steps or at least a portion of the sub-steps or stages of other steps.

Depending on the context, the word "if" as used herein may be interpreted as "in the case of" or "when" or "in response to determining" or "in response to detecting". Similarly, depending on the context, the phrases "if it is determined" or "if (a stated condition or event) is detected" may be interpreted as "when it is determined" or "in response to determining" or "when (the stated condition or event) is detected" or "in response to detecting (the stated condition or event)".

It will be noted that, in the present disclosure, step designations such as S201, S202 are used for the purpose of more clearly and concisely expressing the corresponding content and do not constitute a substantive limitation on the order. Those skilled in the art may, in specific implementations, perform S202 first and then S201, etc., but such should all fall within the protection scope of the present disclosure.

To better understand the data processing method of the embodiments of the present disclosure, the following first describes the system architecture applicable to the embodiments of the present disclosure.

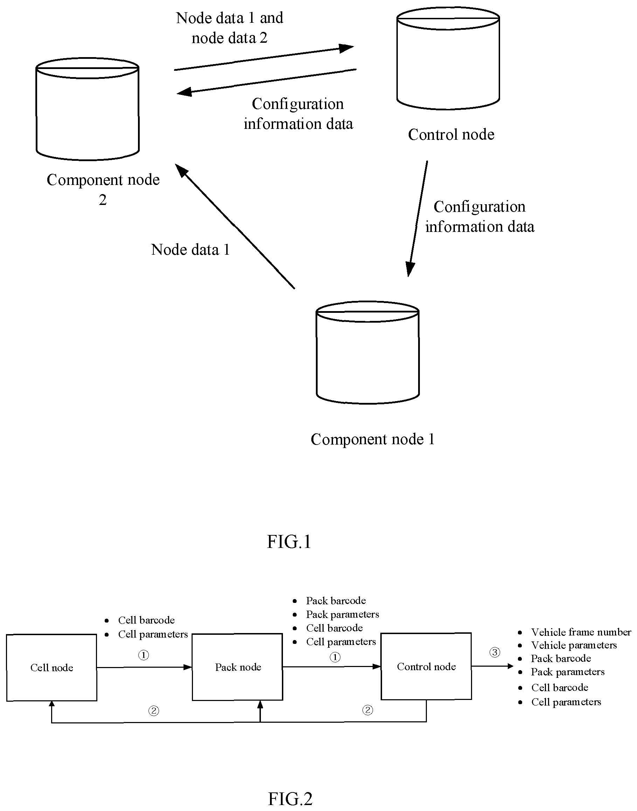

Reference is made to FIG. 1. FIG. 1 is a schematic diagram of a system architecture of a data processing method of an embodiment of the present disclosure. The device form shown in FIG. 1 is used as an example and does not constitute a limitation on the embodiment of the present disclosure. As shown in FIG. 1, the system may include a control node and at least one component node (e.g., component node 1 and component node 2 as shown in FIG. 1). The control node may be a component assembly node or a server, and a component node may be a component that generates data. Taking a power battery as an example, the component nodes of the power battery may include a cell node that generates cell data, a pack node that generates pack data, etc. The control node of the power battery may be an assembly node of the various components included in the power battery or may be a server that receives data generated by the various nodes of the power battery. Further, one component node may correspond to a database for storing data, which may be stored in a computer device. The computer device may include but is not limited to: smart phones (e.g., Android phones, iOS phones, etc.), tablet computers, portable personal computers, mobile Internet devices (MID), servers, and other devices, which are not limited in the embodiments of the present disclosure.

Component node 1 or component node 2 generates node data in any time period, e.g., component node 1 generates node data 1 or component node 2 generates node data 2 (where the node data may be, for example, cell data or pack data), and then the node data generated by each component node in any time period is sent to the control node. The control node may integrate the node data generated by each component node to acquire configuration information data for each component node for that time period, and then the control node may send the configuration information data to each component node. The sending method may include first unicasting or multicasting to a single component node or a part of component nodes, and then the component node publishes the configuration information data to the distributed storage network, or may also include the control node broadcasting the configuration information data to each component node. For any one of the plurality of component nodes, taking any component node as component node 1 as an example, after the component node receives the configuration information data sent by the control node, it may acquire, from the configuration information data, the node data generated by component node 1 in that time period, and may also acquire, from the distributed storage network, the node data generated by component node 1 in the M time periods prior to that time period. Then component node 1 may store the node data generated by component node 1 in the M time periods prior to that time period and the node data generated by component node 1 in that time period into the distributed storage network. The distributed storage network is a distributed storage network composed of the control node and the at least one component node, where M is a positive integer.

The data processing method of the embodiments of the present disclosure can be applied to distributed storage scenarios involving data generated by multiple subject devices at different stages, such as distributed storage of data generated by various components of a power battery.

Taking distributed storage of data generated by various components of a power battery as an example, component node 1 may be a cell node, and component node 2 may be a pack node. Referring to FIG. 2, FIG. 2 is a schematic diagram of a framework for power battery capacity detection of an embodiment of the present disclosure. The cell node may be a battery of an electric vehicle, and the pack node may be a battery pack. The cell node generates cell data (e.g., may include a cell barcode and cell parameters) in a certain time period, and then the cell node sends the cell data to the pack node. The pack node generates pack data (e.g., may include a pack barcode and pack parameters) in that time period. After receiving the cell data from the cell node, the pack node may send the cell data and the pack data to the control node. The control node may integrate the received cell data and pack data to acquire configuration information data for the plurality of component nodes for that time period, where the configuration information data may include the cell data generated by the cell node in that time period and the pack data generated by the pack node in that time period.

In some embodiments, the control node may integrate vehicle identification information with the received cell data and pack data to acquire configuration information data for that time period, where the configuration information data may include the vehicle identification information, the cell data generated by the cell node in that time period, and the pack data generated by the pack node in that time period. The vehicle identification information may be configured to identify the vehicle running the communication system, and different vehicles have different vehicle identification information. For example, the vehicle identification information may include one or more of the following: a vehicle frame number, and vehicle parameters. The vehicle parameters may include, for example, a vehicle identification number (VIN) or a factory serial number.

After the control node acquires the configuration information data, it may send the configuration information data to each component node in the distributed storage network. Taking the component nodes including the cell node as an example, after the cell node receives the configuration information data broadcast by the control node, the cell node may acquire, from the configuration information data, the cell data generated by the cell node in that time period, and may also acquire, from the distributed storage network, the cell data generated by the cell node in the M time periods prior to that time period. Then the cell node may store the cell data generated by the cell node in the M time periods prior to that time period and the cell data generated by the cell node in that time period into the distributed storage network. For example, the cell node may broadcast the cell data generated by the cell node in the M time periods prior to that time period and the cell data generated by the cell node in that time period into the distributed storage network, thereby enabling each component node and the control node that receive the cell data in the distributed storage network to store the cell data. Similarly, taking the component nodes including the pack node as an example, after the pack node receives the configuration information data broadcast by the control node, the pack node may acquire, from the configuration information data, the pack data generated by the pack node in that time period, and then the pack node may acquire, from the distributed storage network, the pack data generated by the pack node in the M time periods prior to that time period. Then the pack node may store the pack data generated by the pack node in the M time periods prior to that time period and the pack data generated by the pack node in that time period into the distributed storage network.

It can be seen that, in the embodiments of the present disclosure, after each component node generates node data within any time period, the node data generated by each component node is sent to the control node. The control node integrates the node data generated by each component node within the same time period to acquire configuration information data and then sends the configuration information data to each component node. On this basis, after receiving the configuration information data broadcast by the control node, any component node can acquire, from the distributed storage network, the node data generated by the target component node within the target time period, and then acquire, from the distributed storage network, the node data generated by the target component node within the M time periods prior to the target time period, and then store the node data generated by the target component node within the M time periods prior to the target time period and the node data generated by the target component node within the target time period into the distributed storage network. Thus, the completeness of the configuration information data throughout the entire life cycle can be ensured. Meanwhile, after acquiring the node data generated by the target component node within the target time period, any component node can verify it with the node data stored locally to ensure the accuracy of the node data, and then store the node data generated by the target component node within the M time periods prior to the target time period and the node data generated by the target component node within the target time period into the distributed storage network, further ensuring the accuracy of the configuration information throughout the entire life cycle.

A life cycle may be the period from when a vehicle is fully charged to when the power is estimated to be exhausted. The life cycle may be preset, for example, it may be set before the vehicle leaves the factory, or it may be set by the vehicle owner. For example, a life cycle may be one day or one week (i.e., 7 days), etc. A life cycle may be divided into a plurality of time periods, and how many time periods to divide into may be preset, for example, it may be set before the vehicle leaves the factory, or it may be set by the vehicle owner.

For example, assuming a life cycle is one day (i.e., 24 hours) and a time period is 8 hours, then the cell node may acquire cell data generated by the cell node from 8:00 to 16:00 on August 1, 2023 (i.e., the target time period), and the cell node sends the cell data to the pack node. The pack node may acquire pack data generated by the pack node from 8:00 to 16:00 on August 1, 2023, and send the received cell data and the acquired pack data to the control node. The control node may integrate the cell data generated by the cell node from 8:00 to 16:00 on August 1, 2023, and the pack data generated by the pack node from 8:00 to 16:00 on August 1, 2023, to acquire configuration information data for the time period from 8:00 to 16:00 on August 1, 2023. The previous time period of the target time period is from 0:00 to 8:00 on August 1, 2023, and the next time period of the target time period is from 16:00 to 24:00 on August 1, 2023. Each component node can acquire configuration information data for each time period through the data processing method of the embodiments of the present disclosure and store the configuration information data for each time period in the distributed storage network. Therefore, the configuration information data for the entire life cycle is stored in the distributed storage network, thereby ensuring the completeness of the configuration information data throughout the entire life cycle.

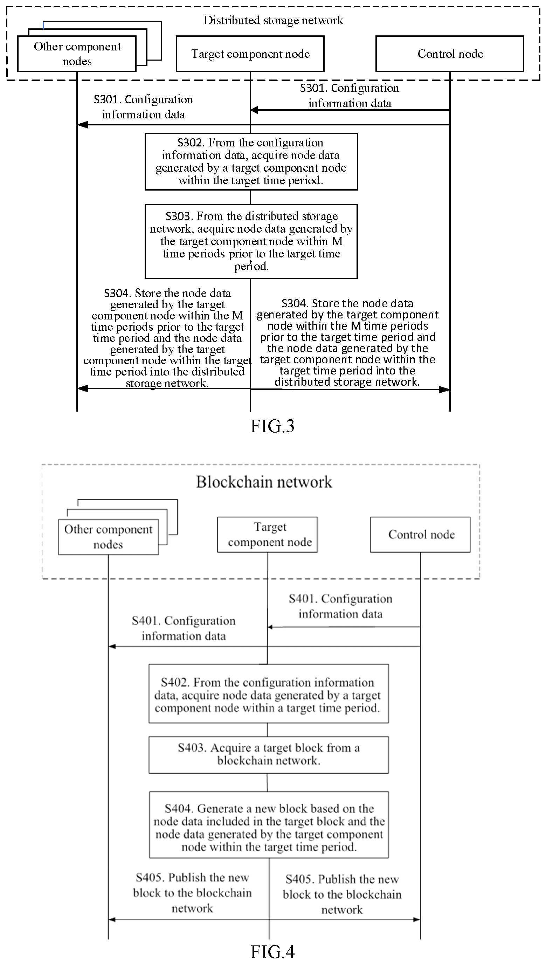

Referring to FIG. 3 in conjunction with the communication system shown in FIG. 1, FIG. 3 is a flowchart of a data processing method of an embodiment of the present disclosure. As shown in the figure:
S301. Receive configuration information data sent by a control node.

The configuration information data includes node data generated by at least one component node within a target time period. For a detailed description of the control node sending the configuration information data to a plurality of component nodes, reference may be made to the relevant description of FIG. 1 above, which will not be repeated in the embodiments of the present disclosure.

S302. From the configuration information data, acquire node data generated by a target component node within the target time period.

The target component node is any component node in the distributed storage network.

In one implementation, since the node data generated by each component node in any time period is stored in the distributed storage network, after any component node receives the configuration information data, it can acquire, from the configuration information data, the node data generated by the target component node in that time period, and at the same time verify it with the node data generated by the target component node in that time period stored locally to ensure the accuracy of the node data generated by the target component node in that time period included in the configuration information data, and then further acquire, from the distributed storage network, the node data generated by the target component node within the M time periods prior to that time period.

For example, taking the target component node as the cell node, after the cell node receives the configuration information data, it can acquire, from the configuration information data, the cell data generated by the cell node in that time period, verify it with the cell data generated by the cell node in that time period stored locally to ensure the accuracy of the cell data generated by the cell node in that time period acquired from the configuration information data, and then acquire, from the distributed storage network, the cell data generated by the cell node within the M time periods prior to that time period.

S303. From the distributed storage network, acquire node data generated by the target component node within M time periods prior to the target time period.

The distributed storage network is a distributed storage network composed of the control node and the at least one component node, where M is a positive integer.

In one embodiment, the distributed storage network includes a blockchain network, which may be a blockchain network composed of the at least one component node, the control node, and a device node.

S304. Store the node data generated by the target component node within the M time periods prior to the target time period and the node data generated by the target component node within the target time period into the distributed storage network.

In one implementation, before storing the node data generated by the target component node within the M time periods prior to the target time period and the node data generated by the target component node within the target time period into the distributed storage network, the target component node may send the node data generated by the target component node within the M time periods prior to the target time period and the node data generated by the target component node within the target time period to other component nodes in the distributed storage network, thereby enabling each of the other component nodes to verify, based on a consensus mechanism, the node data generated by the target component node within the M time periods prior to the target time period and the node data generated by the target component node within the target time period to acquire verification information. The target component node may receive the verification information from each of the other component nodes. If it is determined, based on the verification information from each of the other component nodes, that the verification is successful, then storing of the node data generated by the target component node within the M time periods prior to the target time period and the node data generated by the target component node within the target time period into the distributed storage network is triggered.

Further, if it is determined, based on the verification information from each of the other component nodes, that the verification is unsuccessful, then a vote is initiated to arbitration component nodes in the distributed storage network. The voting result from the arbitration component nodes is received. If the voting result indicates approval, then the node data generated by the target component node within the M time periods prior to the target time period and the node data generated by the target component node within the target time period that are indicated as the voting being successful are stored into the distributed storage network.

The arbitration component nodes may include one node or a plurality of nodes in the distributed storage network. For example, the arbitration component node may be one node in the distributed storage network, where the node has a high confidence level, such as an authoritative node or a node with high credibility. For example, the arbitration component node may be the control node. On this basis, the arbitration component node may arbitrate the node data sent by the target component node through a "one-vote veto" mechanism or a "one-vote approval" mechanism. As another example, the arbitration component nodes may include a plurality of nodes in the distributed storage network, for example, may include a part of the nodes or all nodes in the distributed storage network, and each arbitration component node may arbitrate the node data sent by the target component node through a "majority rule" mechanism.

In the embodiments of the present disclosure, the target component node may send, to other component nodes in the distributed storage network, the node data generated by the target component node within the M time periods prior to the target time period and the node data generated by the target component node within the target time period, and broadcast the node data, verifying the node data based on the consensus mechanism. In a case where the configuration information data received from the control node for that time period stored in each component node is consistent, the node data generated by the target component node within the M time periods prior to the target time period and the node data generated by the target component node within the target time period are stored into the distributed storage network. In a case where the configuration information data received from the control node for that time period stored in each component node is inconsistent, a multi-party arbitration approach is used to determine the data to be stored. In this way, consistency of data among the parties is achieved, and the authenticity and accuracy of the data in the circulation process are ensured. In addition, during the multi-party arbitration process, by assigning different weights to each terminal device in a set of terminal devices for arbitration, the determination of responsibility when the interaction results are inconsistent can be clarified.

In an embodiment, the distributed storage network may include a blockchain network, where a blockchain is a chain data structure that combines data blocks in a time-sequential form in a sequential connection, and is a distributed ledger that ensures data immutability and unforgeability by means of cryptography. A plurality of independent distributed nodes (i.e., blockchain nodes) store the same records. Blockchain technology achieves decentralization and has become the cornerstone of trusted digital asset storage, transfer, and transaction. The blockchain network includes a plurality of blockchain nodes. The blockchain nodes may be full nodes. A full node refers to a node that stores the complete blockchain. A full node is typically a high-performance computing device.

Reference is made to FIG. 4. FIG. 4 is a flowchart of a data processing method based on a blockchain of an embodiment of the present disclosure. As shown in FIG. 4:
S401. Receive configuration information data sent by a control node.

For relevant descriptions of the control node sending configuration information data to component nodes in the embodiments of the present disclosure, reference may be made to the relevant records of FIG. 1 above, which will not be repeated here.

S402. From the configuration information data, acquire node data generated by a target component node within a target time period.

S403. Acquire a target block from a blockchain network.

The target component node is any component node in the blockchain network. The target block is generated based on node data generated by the target component node in the previous time period of the time period.

Since the node data generated by each component node in any time period is stored on the chain, after any component node receives the configuration information data, it can acquire the target block from the blockchain network. The target block may include the node data generated by the target component node in the previous time period of the time period.

For example, taking the target component node as the cell node, after the cell node receives the configuration information data, it can acquire the target block from the blockchain network. The target block may include the cell data generated by the cell node in the previous time period of the time period. Taking the target component node as the pack node, after the pack node receives the configuration information data, it can acquire the target block from the blockchain network. The target block may include the pack data generated by the pack node in the previous time period of the time period.

S404. Generate a new block based on the node data included in the target block and the node data generated by the target component node within the target time period.

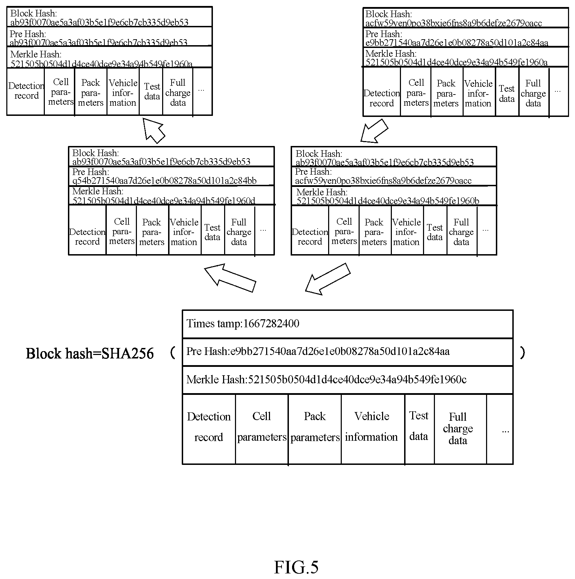

In this implementation, the method of generating blocks is shown in FIG. 5. FIG. 5 is a schematic diagram of a blockchain implementation principle of an embodiment of the present disclosure. As shown in FIG. 5, each block includes a block header, a block body, and a block hash.

The block header includes the hash of the previous block (i.e., the target block generated based on the node data generated in the previous time period of the target time period) (Prev Hash), a Merkle Hash, a timestamp, etc. Prev Hash is used to record the block hash of the previous block, meaning that the previous block can be traced back according to this Prev Hash. The Merkle Hash is used to record all interaction records of the current block to ensure that the interaction records cannot be modified.

The block body is the actual data part, and the actual data in the block body may also be referred to as block body data. In some embodiments, the block body data includes configuration information data for each time period.

The block hash is used to identify a block, and the block hash can be acquired by calculating the hash of the block header using a hash algorithm. A hash algorithm, also known as a hashing algorithm, is a one-way function that can convert input data of any length into an output of a fixed length. In some embodiments, common hash algorithms include, for example, Message-Digest Algorithm 5 (MD5), Secure Hash Algorithm (SHA) 256 (SHA-256), SHA-512, etc.

In this implementation, since the first block in the blockchain network has no block information of a historical block, the first block only needs to generate a new block based on the current basic battery information at that stage; an intermediate node needs to first acquire the information of the previous block to generate a new block, and then access the blockchain chain. By adopting this implementation, if any terminal device modifies the configuration information at a certain stage (e.g., modifies the order of vehicles), it will cause the verification of subsequent blocks to fail and the chain to be interrupted, thus ensuring that the data is complete and traceable throughout the entire life cycle interaction process.

S405. Publish the new block to the blockchain network.

In an embodiment, before publishing the new block to the blockchain network, the target component node also broadcasts the new block to other nodes in the blockchain network (including other component nodes and the control node). Then, each component node in the blockchain network performs consensus on the new block based on a consensus mechanism, and after the consensus is successful, each component node adds the new block to the chain.

In this embodiment, the consensus mechanism can ensure that the configuration information data in the new block stored by each node is the same, thereby ensuring the consistency and reliability of the configuration information data.

In some embodiments, the way each node in the blockchain network performs consensus on the new block based on the consensus mechanism may include: other component nodes, after receiving the configuration information data from the control node, store the configuration information data; the other nodes generate a first hash value corresponding to the configuration information data; after receiving the new block broadcast by the target component node, generate a second hash value corresponding to the new block; the target component node includes any component node in the blockchain network; if the first hash value and the second hash value corresponding to the new block are the same, it is determined that the configuration information data stored by the other component nodes and the configuration information data included in the new block generated by the target component node are the same; if the first hash value and the second hash value corresponding to the new block are different, it is determined that the configuration information included in the new block generated by the target component node is different from the configuration information data stored by any other component node.

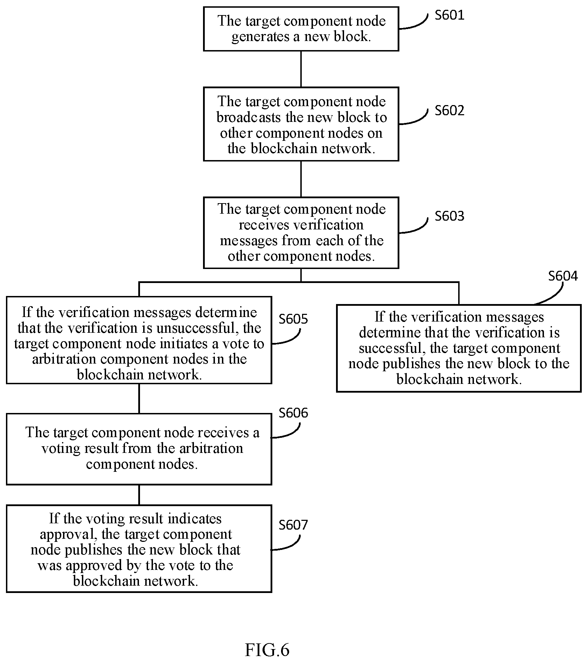

In an embodiment, since a possibility that a component node in the blockchain network may maliciously tamper with a received block exists, the aforementioned target component node will also verify the generated new block before publishing it to the blockchain network. Reference is made to FIG. 6. FIG. 6 is a flowchart of another data processing method of an embodiment of the present disclosure. As shown in the figure:
S601. The target component node generates a new block.
S602. The target component node broadcasts the new block to other component nodes on the blockchain network.
S603. The target component node receives verification messages from each of the other component nodes.

After each of the other nodes receives the new block broadcast by the target component node, it can verify the new block to acquire a verification message. Then, after acquiring the verification message, each of the other component nodes can send the verification message to the target component node.

The way each of the other nodes verifies the new block includes a consensus mechanism. For a specific description of the consensus mechanism, reference may be made to the relevant description of the consensus mechanism above, which will not be repeated here.

S604. If the verification messages determine that the verification is successful, the target component node publishes the new block to the blockchain network.

After receiving the verification messages sent by each of the other nodes in the blockchain network, the target component node can determine whether the verification is successful based on the verification messages. If the verification is successful, it indicates that the block content of the new block received by each node is consistent. Based on this, the target component node can publish the new block to the blockchain network.

S605. If the verification messages determine that the verification is unsuccessful, the target component node initiates a vote to arbitration component nodes in the blockchain network.

After receiving the verification messages sent by each of the other component nodes in the blockchain network, the target component node can determine whether the verification is successful based on the verification messages. If the verification is unsuccessful, it indicates that the block content of the new block received by each component node is not completely consistent. In this case, it is necessary to arbitrate the new block through an arbitration mechanism to determine which block content should be added to the chain. Based on this, if it is determined that the verification is unsuccessful based on the verification messages, the target component node may initiate a vote to the arbitration component nodes in the blockchain network.

The arbitration component nodes may include one node or a plurality of nodes in the blockchain network. For the selection of arbitration nodes, reference may be made to the description in step S304 above, which will not be repeated here.

S606. The target component node receives a voting result from the arbitration component nodes.

S607. If the voting result indicates approval, the target component node publishes the new block that was approved by the vote to the blockchain network.

In some embodiments, determining to publish the new block indicated as approved by the vote to the blockchain network based on the voting result of the arbitration component nodes includes: when the number of arbitration component nodes is plural, determining a sum of K vote scores; any sum of vote scores is a sum of vote scores for which the voting result indicates approval to publish the new block to the blockchain network, where K is a positive integer and K ≥ 2; determining the new block corresponding to the largest sum of vote scores among the K sums of vote scores to be published to the blockchain network; when the number of arbitration component nodes is 1, determining the new block indicated by the voting result of the arbitration component node to be published to the blockchain network.

In some embodiments, the method for determining any sum of vote scores includes: calculating a vote score for each arbitration component node based on a weight of each arbitration component node and a voting result of each arbitration component node; adding the vote scores of the arbitration component nodes with the same voting result according to their weights to acquire any sum of vote scores.

For example, assume the number of arbitration component nodes is 4, e.g., the arbitration component nodes are a cell node (denoted as component node 1), a pack node 1 (denoted as component node 2), a pack node 2 (denoted as component node 3), and a control node (denoted as component node 4). The new block stored in component node 1 is block 1, the new block stored in component node 2 is block 2, the new block stored in component node 3 is block 2, and the new block stored in component node 4 is block 1. If the weights of component node 1, component node 2, component node 3, and component node 4 are 0.2, 0.2, 0.2, and 0.4 respectively, and the voting results of component node 1, component node 2, component node 3, and component node 4 indicating the new block to be added to the blockchain are block 1, block 2, block 2, and block 1 respectively, then the component nodes can determine two sums of vote scores (i.e., the sum of vote scores for block 1 and the sum of vote scores for block 2). The sum of vote scores for block 1 is 0.2 + 0.4 = 0.6; the sum of vote scores for block 2 is 0.2 + 0.2 = 0.4. In this case, the component nodes can determine the new block corresponding to the largest sum of vote scores among the two sums (i.e., 0.6), i.e., block 1, as the new block to be added to the blockchain. In other words, the component nodes can determine the new block to be added to the blockchain by assigning different weights to each arbitration component node and following the majority rule. In this way, by assigning different weights to different arbitration component nodes for arbitration, the determination of responsibility when the interaction results are inconsistent can be clarified.

As another example, assume the number of arbitration component nodes is 1, e.g., the arbitration component node is the control node. If the voting result of the arbitration component node indicates that the new block to be added to the blockchain is the new block stored in the cell node (denoted as block 3), then the component nodes can determine the new block to be added to the blockchain as block 3. In other words, the component nodes determining the new block to be added to the blockchain may be based on the rule that the arbitration component node has one-vote approval authority.

In the embodiments of the present disclosure, the target component node may broadcast the generated new block to other component nodes on the blockchain network, and verify the generated new block based on the consensus mechanism. In a case where the configuration information data received from the control node for that time period stored in each component node is consistent, the generated new block is published to the blockchain network. In a case where the configuration information data received from the control node for that time period stored in each component node is inconsistent, a multi-party arbitration approach is used to determine the data of the new block. In this way, consistency of data among the parties is achieved, and the data is made authentic, immutable, and traceable in the circulation process. In addition, during the multi-party arbitration process, by assigning different weights to each terminal device in a set of terminal devices for arbitration, the determination of responsibility when the interaction results are inconsistent can be clarified.

In one implementation, the distributed storage network includes a device node, which may represent the node where the power battery is used in a device. The device corresponding to the device node may include, but is not limited to, a vehicle, a vessel, or an unmanned aerial vehicle.

After the target component node stores the node data generated by the target component node within the M time periods prior to the target time period and the node data generated by the target component node within the target time period into the distributed storage network, the target component node or any component node in the distributed storage network may receive a data acquisition request from a cloud server, thereby enabling the cloud server to acquire configuration information data for the current life cycle from the distributed storage network. The cloud server may also acquire device usage data for the current life cycle from the device node, i.e., data during the battery pack charging process, such as voltage, current, charging time, and other parameters. Then, based on the acquired configuration information data and the device usage data, batch detection of the remaining capacity of the power battery can be performed. The current life cycle includes the target time period and the M time periods prior to the target time period, and the device usage data is sent by the device node to the cloud server.

Further, the control node may send the acquired remaining power battery capacity for the current life cycle to each component node in the distributed storage network, where the power battery capacity is sent by the cloud server to the control node. The component nodes may store the remaining power battery capacity into the distributed storage network.

On this basis, the remaining power battery capacity for the current life cycle and the remaining power battery capacities for N consecutive life cycles prior to the current life cycle can be acquired from the distributed storage network, where N is a positive integer. Based on the acquired N+1 remaining power battery capacities and the life cycle corresponding to each remaining power battery capacity, a degradation state of the remaining power battery capacity of the device can be determined. If the degradation state indicates that there is an abnormal degradation in the remaining power battery capacity of the device, notification information is output. The degradation state is configured to indicate whether there is an abnormal degradation in the remaining power battery capacity of the device.

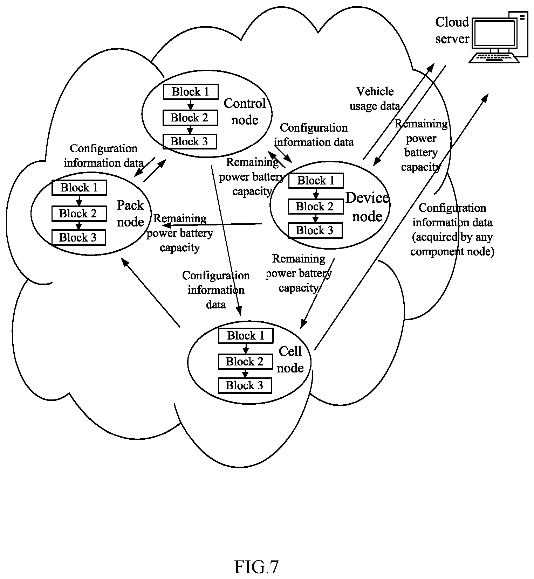

The following describes the data processing method of the embodiments of the present disclosure with an example of performing power battery capacity detection on an electric vehicle, in conjunction with the system architecture shown in FIG. 1. Taking component node 1 as the cell node and component node 2 as the pack node as an example, reference is made to FIG. 7. FIG. 7 is a schematic diagram of power battery capacity detection based on a blockchain of an embodiment of the present disclosure. The cell node generates cell data (e.g., may include a cell barcode and cell parameters) in a certain time period, and then the cell node sends the cell data to the pack node. The pack node generates pack data (e.g., may include a pack barcode and pack parameters) in that time period. After receiving the cell data from the cell node, the pack node sends the cell data and the pack data to the control node. The control node integrates the received cell data and pack data to acquire configuration information data for the plurality of component nodes for that time period, where the configuration information data may include the cell data generated by the cell node in that time period, the pack data generated by the pack node in that time period, and the vehicle identification. The cloud server acquires vehicle usage data for the current life cycle at the device node, where the vehicle usage data is data during the battery pack charging process, such as voltage, current, charging time, and other parameters. The current life cycle includes that time period and the previous time period. Then, the cloud server may acquire complete configuration information for the current life cycle from any node in the blockchain network, including the cell node and the pack node, and may acquire the remaining power battery capacity for the current life cycle based on the acquired configuration information and the vehicle usage data.

Further, the device node sends the acquired remaining power battery capacity for the current life cycle to each component node in the blockchain network, where the power battery capacity is sent by the aforementioned cloud server to the device node. The component nodes generate a block containing the remaining power battery capacity based on the received remaining power battery capacity and publish the block to the blockchain network. It can be seen that, in the data processing method of the embodiments of the present disclosure, power battery capacity detection is performed based on blockchain technology. It integrates multiple technologies such as distributed storage, encryption algorithms, and consensus mechanisms, which can ensure the authenticity of the detection data for the power battery capacity and also guarantee the integrity of the detection records. In addition, the battery configuration data used for remote batch detection of the remaining battery capacity is stored in a distributed form by the blockchain, thereby ensuring the accuracy, credibility, and acquisition efficiency of the battery configuration data, thus making cloud-based batch detection of battery capacity feasible, accurate, and efficient. The detected remaining battery capacity is also added to the blockchain for distributed storage, so that the degradation rate of the battery capacity over several charging time periods can be acquired, enabling timely warning or control strategy adjustment when battery degradation is abnormal.

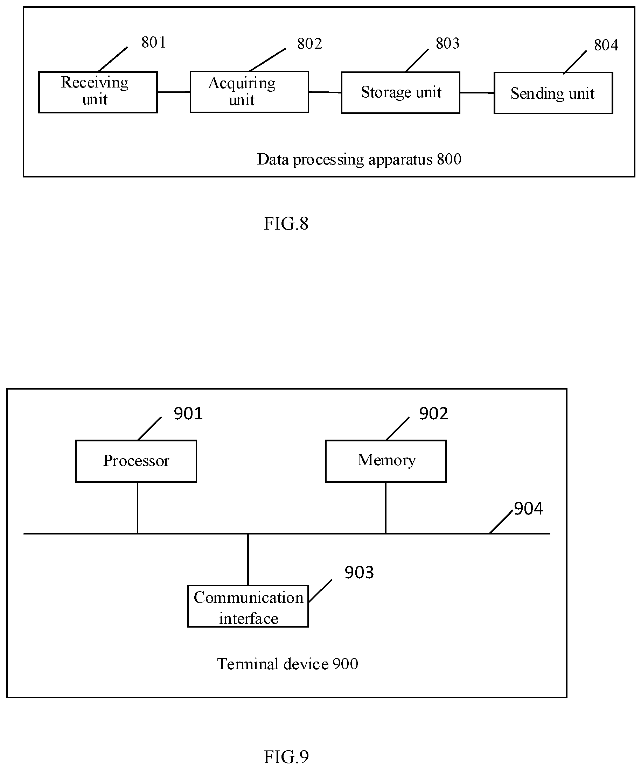

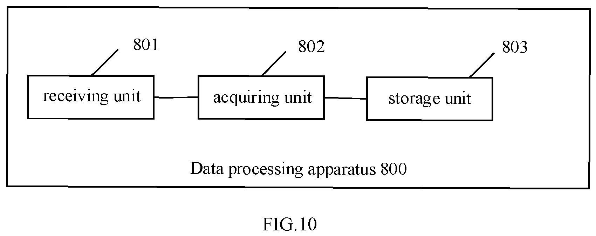

Based on the description of the relevant embodiments of the above data processing method, an embodiment of the present disclosure further provides a data processing apparatus, which can execute the power battery capacity detection method shown in FIGS. 1 to 7. Reference is made to FIG. 8 and FIG. 10. FIG. 8 and FIG. 10 are schematic diagrams of a data processing apparatus 800 of an embodiment of the present disclosure. As shown in FIG. 8, the data processing apparatus may include, but is not limited to, a receiving unit 801, an acquiring unit 802, and a storage unit 803.

The receiving unit 801 is configured to receive configuration information data sent by a control node, where the configuration information data includes node data generated by at least one component node within a target time period.

The acquiring unit 802 is configured to acquire, from the configuration information data, node data generated by a target component node within the target time period.

The acquiring unit 802 is further configured to acquire, from a distributed storage network, node data generated by the target component node within M time periods prior to the target time period, where the distributed storage network is a distributed storage network composed of the control node and the at least one component node, and M is a positive integer.

The storage unit 803 is configured to store the node data generated by the target component node within the M time periods prior to the target time period and the node data generated by the target component node within the target time period into the distributed storage network.

In some embodiments, the distributed storage network includes a blockchain network.

The acquiring unit 802 acquiring, from the distributed storage network, node data generated by the target component node within M time periods prior to the target time period includes:
acquiring a target block from the blockchain network, where the blockchain network is a blockchain network composed of the at least one component node and the control node, and the target block is generated based on node data generated by the target component node within a time period prior to the target time period.

Storing the node data generated by the target component node within the M time periods prior to the target time period and the node data generated by the target component node within the target time period into the distributed storage network includes:
generating a new block based on the node data included in the target block and the node data generated by the target component node within the target time period; and
publishing the new block to the blockchain network.

In some embodiments, the data processing apparatus further includes a sending unit 804.

Before the storage unit 803 stores the node data generated by the target component node within the M time periods prior to the target time period and the node data generated by the target component node within the target time period into the distributed storage network, the sending unit 804 is configured to send the node data generated by the target component node within the M time periods prior to the target time period and the node data generated by the target component node within the target time period to other component nodes in the distributed storage network, thereby enabling each of the other component nodes to verify, based on a consensus mechanism, the node data generated by the target component node within the M time periods prior to the target time period and the node data generated by the target component node within the target time period to acquire verification information.

The receiving unit 801 is further configured to receive the verification information from each of the other component nodes.

If it is determined, based on the verification information from each of the other component nodes, that the verification is successful, storing the node data generated by the target component node within the M time periods prior to the target time period and the node data generated by the target component node within the target time period into the distributed storage network is triggered.

In some embodiments, the storage unit 803 storing the node data generated by the target component node within the M time periods prior to the target time period and the node data generated by the target component node within the target time period into the distributed storage network includes:
if it is determined, based on the verification information from each of the other component nodes, that the verification is unsuccessful, initiating a vote to arbitration component nodes in the distributed storage network, where the arbitration component nodes include at least one component node in the distributed storage network;
receiving a voting result from the arbitration component nodes; and
if the voting result indicates approval, storing the node data generated by the target component node within the M time periods prior to the target time period and the node data generated by the target component node within the target time period, which are indicated as the voting being successful, into the distributed storage network.

In some embodiments, the distributed storage network includes a device node.

After the storage unit 803 stores the node data generated by the target component node within the M time periods prior to the target time period and the node data generated by the target component node within the target time period into the distributed storage network, the receiving unit 801 is further configured to receive a data acquisition request sent by a cloud server.

The acquiring unit 802 is further configured to, in response to the data acquisition request, acquire configuration information data generated by the at least one component node within a current life cycle from the distributed storage network, where the current life cycle includes the target time period and the M time periods prior to the target time period.

The sending unit 804 is further configured to send the acquired configuration information data to the cloud server, thereby enabling the cloud server to perform, based on the acquired configuration information data and device usage data collected within the current life cycle, a cloud-based batch detection on a power battery capacity of a device corresponding to the device node to acquire a remaining power battery capacity, where the device usage data is sent by the device node to the cloud server.

In some embodiments, the receiving unit 801 is further configured to receive the remaining power battery capacity sent by the device node, where the power battery capacity detection result is sent by the cloud server to the device node.

The storage unit 803 is further configured to store the remaining power battery capacity into the distributed storage network.

In some embodiments, the acquiring unit 802 is further configured to acquire, from the distributed storage network, the remaining power battery capacity for the current life cycle, and remaining power battery capacities for N consecutive life cycles prior to the current life cycle, where N is a positive integer;
determine, based on the acquired N+1 remaining power battery capacities and the life cycle corresponding to each remaining power battery capacity, a degradation state of the remaining power battery capacity of the device, where the degradation state is configured to indicate whether there is an abnormal degradation in the remaining power battery capacity of the device; and
if the degradation state indicates that there is an abnormal degradation in the remaining power battery capacity of the device, output notification information.

In some embodiments, the storage unit 803 is further configured to store the configuration information data sent by the control node into the distributed storage network.

In the embodiments of the present disclosure, after each component node generates node data within any time period, the node data generated by each component node is sent to the control node. The control node integrates the node data generated by each component node within the same time period to acquire configuration information data, and then sends the configuration information data to each component node. On this basis, after the receiving unit 801 receives the configuration information data sent by the control node, the acquiring unit 802 may acquire, from the configuration information data, the node data generated by the target component node within the target time period, and may also acquire, from the distributed storage network, the node data generated by the target component node within the M time periods prior to the target time period, where the distributed storage network is a distributed storage network composed of the control node and the at least one component node, and M is a positive integer. The storage unit 803 stores the node data generated by the target component node within the M time periods prior to the target time period and the node data generated by the target component node within the target time period into the distributed storage network, thereby ensuring the completeness of the configuration information data throughout the entire life cycle.

An embodiment of the present disclosure further provides a terminal device. Reference is made to FIG. 9. FIG. 9 is a schematic structural diagram of a terminal device 900 of an embodiment of the present disclosure. As shown in FIG. 9, the terminal device at least includes a processor 901, a memory 902, and a communication interface 903, which may be connected via a bus 904 or other means. The embodiment of the present disclosure takes connection via the bus 904 as an example. The processor 901 in the embodiment of the present disclosure may execute the operations of the component node device in the aforementioned data processing method by running a computer program stored in the memory 902, for example:
receiving configuration information data sent by a control node, where the configuration information data includes node data generated by at least one component node within a target time period;
acquiring, from the configuration information data, node data generated by a target component node within the target time period;
acquiring, from a distributed storage network, node data generated by the target component node within M time periods prior to the target time period, where the distributed storage network is a distributed storage network composed of the control node and the at least one component node, and M is a positive integer; and
storing the node data generated by the target component node within the M time periods prior to the target time period and the node data generated by the target component node within the target time period into the distributed storage network.

In some embodiments, the distributed storage network includes a blockchain network.

The processor 901 acquiring, from the distributed storage network, node data generated by the target component node within M time periods prior to the target time period is specifically configured to perform the following operations:
acquiring a target block from the blockchain network, where the blockchain network is a blockchain network composed of the at least one component node and the control node, and the target block is generated based on node data generated by the target component node within a time period prior to the target time period.

Storing the node data generated by the target component node within the M time periods prior to the target time period and the node data generated by the target component node within the target time period into the distributed storage network includes:
generating a new block based on the node data included in the target block and the node data generated by the target component node within the target time period; and
publishing the new block to the blockchain network.

In some embodiments, before storing the node data generated by the target component node within the M time periods prior to the target time period and the node data generated by the target component node within the target time period into the distributed storage network, the processor 901 is further configured to perform the following operations:
sending the node data generated by the target component node within the M time periods prior to the target time period and the node data generated by the target component node within the target time period to other component nodes in the distributed storage network, thereby enabling each of the other component nodes to verify, based on a consensus mechanism, the node data generated by the target component node within the M time periods prior to the target time period and the node data generated by the target component node within the target time period to acquire verification information;
receiving the verification information from each of the other component nodes; and
if it is determined, based on the verification information from each of the other component nodes, that the verification is successful, triggering storing the node data generated by the target component node within the M time periods prior to the target time period and the node data generated by the target component node within the target time period into the distributed storage network.

In some embodiments, the processor 901 storing the node data generated by the target component node within the M time periods prior to the target time period and the node data generated by the target component node within the target time period into the distributed storage network is specifically configured to perform the following operations:
if it is determined, based on the verification information from each of the other component nodes, that the verification is unsuccessful, initiating a vote to arbitration component nodes in the distributed storage network, where the arbitration component nodes include at least one component node in the distributed storage network;
receiving a voting result from the arbitration component nodes; and
if the voting result indicates approval, storing the node data generated by the target component node within the M time periods prior to the target time period and the node data generated by the target component node within the target time period, which are indicated as the voting being successful, into the distributed storage network.

In some embodiments, the distributed storage network includes a device node.

After storing the node data generated by the target component node within the M time periods prior to the target time period and the node data generated by the target component node within the target time period into the distributed storage network, the processor 901 is further configured to perform the following operations:
receiving a data acquisition request sent by a cloud server;
in response to the data acquisition request, acquiring configuration information data generated by the at least one component node within a current life cycle from the distributed storage network, where the current life cycle includes the target time period and the M time periods prior to the target time period; and
sending the acquired configuration information data to the cloud server, thereby enabling the cloud server to perform, based on the acquired configuration information data and device usage data collected within the current life cycle, a cloud-based batch detection on a power battery capacity of a device corresponding to the device node to acquire a remaining power battery capacity, where the device usage data is sent by the device node to the cloud server.

In some embodiments, the processor 901 is further configured to perform the following operations:
receiving the remaining power battery capacity sent by the device node, where the power battery capacity detection result is sent by the cloud server to the device node; and
storing the remaining power battery capacity into the distributed storage network.

In some embodiments, the processor 901 is further configured to perform the following operations:
acquiring, from the distributed storage network, the remaining power battery capacity for the current life cycle, and remaining power battery capacities for N consecutive life cycles prior to the current life cycle, where N is a positive integer;
determining, based on the acquired N+1 remaining power battery capacities and the life cycle corresponding to each remaining power battery capacity, a degradation state of the remaining power battery capacity of the device, where the degradation state is configured to indicate whether there is an abnormal degradation in the remaining power battery capacity of the device; and
if the degradation state indicates that there is an abnormal degradation in the remaining power battery capacity of the device, outputting notification information.

In some embodiments, the processor 901 is further configured to perform the following operation:
storing the configuration information data sent by the control node into the distributed storage network.

In the embodiments of the present disclosure, after each component node generates node data within any time period, the node data generated by each component node is sent to the control node. The control node integrates the node data generated by each component node within the same time period to acquire configuration information data, and then sends the configuration information data to each component node. On this basis, after the processor 901 receives the configuration information data sent by the control node, it may acquire, from the configuration information data, the node data generated by the target component node within the target time period, and may also acquire, from the distributed storage network, the node data generated by the target component node within the M time periods prior to the target time period, where the distributed storage network is a distributed storage network composed of the control node and the at least one component node, and M is a positive integer, and store the node data generated by the target component node within the M time periods prior to the target time period and the node data generated by the target component node within the target time period into the distributed storage network, thereby ensuring the completeness of the configuration information data throughout the entire life cycle.

The present disclosure further provides a computer-readable storage medium, having a computer program stored thereon, where the computer program, when executed by a processor, implements the steps in any of the foregoing method embodiments.

An embodiment of the present disclosure further provides a computer program product, which includes computer program code, where the computer program code, when run on a computer, causes the computer to execute the steps in any of the foregoing method embodiments.

An embodiment of the present disclosure further provides a chip, including a memory and a processor, where the memory is configured to store a computer program, and the processor is configured to invoke and run the computer program from the memory, causing a device equipped with the chip to execute the steps in any of the foregoing method embodiments.

The steps in the method embodiments of the present disclosure may be adjusted in order, merged, or deleted as needed.

The units in the apparatus embodiments of the present disclosure may be merged, divided, or deleted as needed.

In the present disclosure, for the same or similar terms, concepts, technical solutions, and/or application scenario descriptions, a detailed description is generally given only at the first occurrence. For the sake of brevity, repeated descriptions are generally not given for later occurrences. When understanding the technical solutions of the present disclosure, reference may be made to the previous relevant detailed description for the same or similar terms, concepts, technical solutions, and/or application scenario descriptions that are not described in detail later.

In the present disclosure, the description of each embodiment has its own emphasis. For parts not detailed or recorded in a particular embodiment, reference may be made to the relevant descriptions in other embodiments.

The technical features of the technical solutions of the present disclosure may be combined arbitrarily. To keep the description concise, not all possible combinations of the technical features in the above embodiments are described. However, as long as there is no contradiction in the combination of these technical features, they will all be considered to fall within the scope of the present disclosure.

From the description of the above implementations, those skilled in the art will clearly understand that the methods in the above embodiments can be implemented by means of software plus a necessary universal hardware platform, and certainly also by hardware, but in many cases, the former is a better implementation. Based on such an understanding, the essence of the technical solutions of the present disclosure, or the part that contributes to the prior art, may be embodied in the form of a software product. The computer software product is stored in a storage medium as described above (e.g., ROM/RAM, magnetic disk, optical disk), and includes several instructions for enabling a terminal device (which may be a mobile phone, a computer, a server, a controlled terminal, or a network device, etc.) to execute the methods of each embodiment of the present disclosure.

In the above embodiments, they may be implemented in whole or in part by software, hardware, firmware, or any combination thereof. When implemented by software, they may be implemented in whole or in part in the form of a computer program product. A computer program product includes one or more computer instructions. When the computer program instructions are loaded and executed on a computer, the processes or functions according to the embodiments of the present disclosure are generated in whole or in part. The computer may be a general-purpose computer, a special-purpose computer, a computer network, or other programmable apparatus. The computer instructions may be stored in a computer-readable storage medium or transmitted from one computer-readable storage medium to another. For example, the computer instructions may be transmitted from a website, a computer, a server, or a data center to another website, computer, server, or data center via wired (e.g., coaxial cable, optical fiber, digital subscriber line) or wireless (e.g., infrared, wireless, microwave, etc.) means. The computer-readable storage medium may be any available medium that can be accessed by a computer, or a data storage device such as a server, a data center, etc., that includes one or more available media integrated. The available medium may be a magnetic medium (e.g., floppy disk, storage disk, tape), an optical medium (e.g., DVD), or a semiconductor medium (e.g., Solid State Disk (SSD)), etc.

The above are merely preferred embodiments of the present disclosure and are not intended to limit the patent scope of the present disclosure. Any equivalent structure or equivalent process transformation made using the content of the specification and drawings of the present disclosure, or directly or indirectly applied in other related technical fields, shall be similarly included in the patent protection scope of the present disclosure.

## Claims

1. A data processing method, comprising:
receiving (S301) configuration information data sent by a control node, the configuration information data comprising node data generated by at least one component node within a target time period;
from the configuration information data, acquiring (S302) node data generated by a target component node within the target time period;
from a distributed storage network, acquiring (S303) node data generated by the target component node within M time periods prior to the target time period, the distributed storage network being a distributed storage network composed of the control node and the at least one component node, and M being a positive integer; and
storing (S304) the node data generated by the target component node within the M time periods prior to the target time period and the node data generated by the target component node within the target time period into the distributed storage network.

2. The method according to claim 1, wherein the distributed storage network comprises a blockchain network;
acquiring the node data generated by the target component node within M time periods prior to the target time period from the distributed storage network comprises:
acquiring a target block from the blockchain network, wherein the blockchain network is a blockchain network composed of the at least one component node and the control node, and the target block is generated based on node data generated by the target component node within a time period prior to the target time period;
storing the node data generated by the target component node within the M time periods prior to the target time period and the node data generated by the target component node within the target time period into the distributed storage network comprises:
generating a new block based on the node data contained in the target block and the node data generated by the target component node within the target time period; and
publishing the new block to the blockchain network.

3. The method according to claim 1 or 2, wherein, before storing the node data generated by the target component node within the M time periods prior to the target time period and the node data generated by the target component node within the target time period into the distributed storage network, the method further comprises:
sending the node data generated by the target component node within the M time periods prior to the target time period and the node data generated by the target component node within the target time period to other component nodes in the distributed storage network, thereby enabling each of the other component nodes to verify, based on a consensus mechanism, the node data generated by the target component node within the M time periods prior to the target time period and the node data generated by the target component node within the target time period to acquire verification information;
receiving the verification information from each of the other component nodes; and
if it is determined, based on the verification information from each of the other component nodes, that the verification is successful, triggering storing the node data generated by the target component node within the M time periods prior to the target time period and the node data generated by the target component node within the target time period into the distributed storage network.

4. The method according to any one of claims 1 to 3, wherein storing the node data generated by the target component node within the M time periods prior to the target time period and the node data generated by the target component node within the target time period into the distributed storage network comprises:
if it is determined, based on the verification information from each of the other component nodes, that the verification is unsuccessful, initiating a vote to arbitration component nodes in the distributed storage network, wherein the arbitration component nodes comprise at least one component node in the distributed storage network;
receiving a voting result from the arbitration component nodes; and
if the voting result indicates approval, storing the node data generated by the target component node within the M time periods prior to the target time period and the node data generated by the target component node within the target time period, which are indicated as the voting being successful, into the distributed storage network.

5. The method according to any one of claims 1 to 4, wherein the distributed storage network comprises a device node;
after storing the node data generated by the target component node within the M time periods prior to the target time period and the node data generated by the target component node within the target time period into the distributed storage network, the method further comprises:
receiving a data acquisition request sent by a cloud server;
in response to the data acquisition request, acquiring configuration information data generated by the at least one component node within a current life cycle from the distributed storage network, wherein the current life cycle comprises the target time period and the M time periods prior to the target time period; and
sending the acquired configuration information data to the cloud server, thereby enabling the cloud server to perform, based on the acquired configuration information data and device usage data collected within the current life cycle, a cloud-based batch detection on a power battery capacity of a device corresponding to the device node to acquire a remaining power battery capacity, wherein the device usage data is sent by the device node to the cloud server.

6. The method according to any one of claims 1 to 5, wherein the method further comprises:
receiving the remaining power battery capacity sent by the device node, wherein the power battery capacity detection result is sent by the cloud server to the device node; and
storing the remaining power battery capacity into the distributed storage network.

7. The method according to any one of claims 1 to 6, wherein the method further comprises:
acquiring, from the distributed storage network, the remaining power battery capacity for the current life cycle, and remaining power battery capacities for N consecutive life cycles prior to the current life cycle, wherein N is a positive integer;
determining, based on the acquired N+1 remaining power battery capacities and the life cycle corresponding to each remaining power battery capacity, a degradation state of the remaining power battery capacity of the device, wherein the degradation state is configured to indicate whether there is an abnormal degradation in the remaining power battery capacity of the device; and
if the degradation state indicates that there is an abnormal degradation in the remaining power battery capacity of the device, outputting notification information.

8. The method according to any one of claims 1 to 7, wherein the method further comprises:
storing the configuration information data sent by the control node into the distributed storage network.

9. A communication system, comprising a control node and at least one component node, the at least one component node comprising a target component node, and the target component node being configured to execute the method according to any one of claims 1 to 8.

10. A data processing apparatus (800), comprising:
a receiving unit (801), configured to receive configuration information data sent by a control node, the configuration information data comprising node data generated by at least one component node within a target time period;
an acquiring unit (802), configured to acquire, from the configuration information data, node data generated by a target component node within the target time period;
the acquiring unit (802) being further configured to acquire, from a distributed storage network, node data generated by the target component node within M time periods prior to the target time period, the distributed storage network being a distributed storage network composed of the control node and the at least one component node, and M is a positive integer; and
a storage unit (803), configured to store the node data generated by the target component node within the M time periods prior to the target time period and the node data generated by the target component node within the target time period into the distributed storage network.

11. The data processing apparatus (800) according to claim 10, wherein the distributed storage network comprises a blockchain network;
the acquiring unit (802) acquiring, from a distributed storage network, node data generated by the target component node within M time periods prior to the target time period comprises:
acquiring a target block from the blockchain network, wherein the blockchain network is a blockchain network composed of the at least one component node and the control node, and the target block is generated based on node data generated by the target component node within a time period prior to the target time period;
storing the node data generated by the target component node within the M time periods prior to the target time period and the node data generated by the target component node within the target time period into the distributed storage network comprises:
generating a new block based on the node data contained in the target block and the node data generated by the target component node within the target time period; and
publishing the new block to the blockchain network.

12. The data processing apparatus (800) according to claim 10 or 11, wherein the data processing apparatus (800) further comprises a sending unit (804);
before the storage unit (803) stores the node data generated by the target component node within the M time periods prior to the target time period and the node data generated by the target component node within the target time period into the distributed storage network, the sending unit (804) is configured to send the node data generated by the target component node within the M time periods prior to the target time period and the node data generated by the target component node within the target time period to other component nodes in the distributed storage network, thereby enabling each of the other component nodes to verify, based on a consensus mechanism, the node data generated by the target component node within the M time periods prior to the target time period and the node data generated by the target component node within the target time period to acquire verification information;
the receiving unit (801) is further configured to receive the verification information from each of the other component nodes; and
if it is determined, based on the verification information from each of the other component nodes, that the verification is successful, trigger storing the node data generated by the target component node within the M time periods prior to the target time period and the node data generated by the target component node within the target time period into the distributed storage network.

13. The data processing apparatus (800) according to any one of claims 10 to 12, wherein the storage unit (803) storing the node data generated by the target component node within the M time periods prior to the target time period and the node data generated by the target component node within the target time period into the distributed storage network comprises:
if it is determined, based on the verification information from each of the other component nodes, that the verification is unsuccessful, initiating a vote to arbitration component nodes in the distributed storage network, wherein the arbitration component nodes comprise at least one component node in the distributed storage network;
receiving a voting result from the arbitration component nodes; and
if the voting result indicates approval, storing the node data generated by the target component node within the M time periods prior to the target time period and the node data generated by the target component node within the target time period, which are indicated as the voting being successful, into the distributed storage network.

14. The data processing apparatus (800) according to claim 12 or 13, wherein the distributed storage network comprises a device node;
after the storage unit (803) stores the node data generated by the target component node within the M time periods prior to the target time period and the node data generated by the target component node within the target time period into the distributed storage network, the receiving unit (801) is further configured to receive a data acquisition request sent by a cloud server;
the acquiring unit (802) is further configured to, in response to the data acquisition request, acquire configuration information data generated by the at least one component node within a current life cycle from the distributed storage network, wherein the current life cycle comprises the target time period and the M time periods prior to the target time period; and
the sending unit (804) is further configured to send the acquired configuration information data to the cloud server, thereby enabling the cloud server to perform, based on the acquired configuration information data and device usage data collected within the current life cycle, a cloud-based batch detection on a power battery capacity of a device corresponding to the device node to acquire a remaining power battery capacity, wherein the device usage data is sent by the device node to the cloud server.

15. The data processing apparatus (800) according to claim 14, wherein the receiving unit (801) is further configured to receive the remaining power battery capacity sent by the device node, wherein the power battery capacity detection result is sent by the cloud server to the device node; and
the storage unit (803) is further configured to store the remaining power battery capacity into the distributed storage network.

16. The data processing apparatus (800) according to any one of claims 10 to 15, wherein the storage unit (803) is further configured to store the configuration information data sent by the control node into the distributed storage network.

17. A terminal device (900), comprising a memory (902), a communication interface (903), and a processor (901), the memory (902), the communication interface (903), and the processor (901) being interconnected; the memory (902) storing a computer program, and the processor (901) invoking the computer program stored in the memory (902) to implement the method according to any one of claims 1 to 8.

18. A non-volatile computer-readable storage medium, storing a computer program, the computer program, when executed by a processor, implementing the method according to any one of claims 1 to 8.

19. A computer program product, storing a computer program, the computer program, when executed by a processor, implementing the method according to any one of claims 1 to 8.

20. A vehicle, comprising a vehicle body and a processing module, the processing module being configured to execute the method according to any one of claims 1 to 8 to manage the vehicle.
